# EUROPÄISCHE PATENTSCHRIFT

(11) **EP 2 634 457 B1**
(45) Veröffentlichungstag und Bekanntmachung des Hinweises auf die Patenterteilung: **11.01.2017**
(21) Anmeldenummer: 12001325.5
(22) Anmeldetag: 28.02.2012
(51) Int. Cl.: F16J 15/06, F16J 15/12

(54) **Profilierte Dichtung für ein Gehäuse**
Profiled seal for a housing
Joint profilé pour un boîtier

(43) Veröffentlichungstag der Anmeldung: 04.09.2013
(73) Patentinhaber: Carl Freudenberg KG, 69469 Weinheim (DE)
(72) Erfinder: Kritzer, Peter, Dr., 67147 Forst (DE); Nahrwold, Olaf, 67071 Ludwigshafen (DE); Puett, Georg, 64689 Grasellenbach (DE); Klein, Katrin, 69469 Weinheim (DE); Kramer, Thomas, 64668 Rimbach (DE)

(56) Entgegenhaltungen:
- DE-U1-202004 019 224
- FR-A1- 2 789 144
- JP-A- 2009 126 443
- US-A1- 2011 209 450

## Beschreibung

### Technisches Gebiet

Die Erfindung betrifft eine Dichtung gemäß dem Oberbegriff des Patentanspruchs 1.

### Stand der Technik

Aus der FR 2 789 144 A1 ist eine Dichtung zur Anlage an einer Platte bekannt. Die JP 2009 126 443 A zeigt eine Dichtung zur Anlage an eine Kühlerhaube eines Autos. Die DE 20 2004 019 224 U1 zeigt eine Backofendichtung mit einem Gerüstband.

Extrudierte Profildichtungen werden eingesetzt, um großflächige Bauteile abzudichten. Beispielsweise werden Gehäuse abgedichtet, die aus einer Wanne mit einem entsprechenden Deckel bestehen.

Profildichtungen erlauben eine optimale mechanische Auslegung im Hinblick auf Druck oder Setzverhalten. Dadurch können beispielsweise Abstände von Befestigungsschrauben reduziert werden, ohne dass mechanische Verspannungen zweier Bauteile zu erwarten sind. Hierdurch erlauben sie ein mehrfaches Öffnen des Gehäuses ohne Verzug ("Wellblech-Phänomen").

Eine Anbringung von Profildichtungen über Ecken ist häufig nur sehr schwer realisierbar, da eine mit der Krümmung verbundene Materialverdrängung die Dichteigenschaften verschlechtert. Dies ist umso problematischer, je komplizierter das Profil der Profildichtung ist.

Die wesentlichen Probleme einer Profildichtung sind die folgenden:
Enge Kurvenradien sind schwer realisierbar, da das Verhältnis der Fußbreite eines Profils zu dessen Höhe in der Regel ungünstig ist. Überdies ist eine Befestigung eines Profils an einem Grundkörper, z.B. mittels Verschraubung oder auch Verklebung, nur schwer möglich. Gerade dort, wo maßgeschneiderte Profile eingesetzt werden könnten, treten an Ecken Dichtungsprobleme auf.

Eine ideale Dichtung für großformatige Systeme besteht daher im Prinzip aus einem profilierten oder adaptiven Querschnitt, welcher auch engen Kurvenradien folgt, und einem im Seitenbereich zusätzlichen Fixierkörper, welcher eine Anbringung von Fixierelementen wie Schrauben, Nieten, Klebstoff, Abstandshalter oder Hülsen ermöglicht.

Ein solcher Ansatz ist derzeit durch Gehäusedichtungen realisiert, die als Bauteile in eigens dafür hergestellten Werkzeugen gefertigt werden. Diese sind in der Regel erst bei größeren Stückzahlen ab ca. 1.000 Stück wirtschaftlich herstellbar, da sie ein hohes Investment für entsprechende Werkzeuge sowie großformatige Pressen erfordern.

Diese Konzepte lassen sich aber nicht auf sehr große Gehäuse mit Abmessungen von mehr als 2.000 x 2.000 mm anwenden, da die hierzu notwendigen Pressen und Werkzeuge in der Regel in keinem wirtschaftlichen Verhältnis zu den Stückzahlen der Dichtungen stehen.

Daher werden für derartige Anforderungen bei kleinen Stückzahlen meist Flachdichtungen aus Matten oder Plattenmaterial konfektioniert. Hierbei ist allerdings nachteilig, dass ein hoher Materialausschuss entsteht.

Nachteilig ist auch die fehlende Möglichkeit, das Profil der Anwendung anzupassen. Die Ausgestaltung eines Profils ist bei Verwendung von Matten- oder Plattenmaterial nicht bzw. nur durch aufwendige Nachbehandlung wie Ausfräsen möglich.

Auf Deckeln oder Wannen von Gehäusen aufgebrachte und nachträglich vernetzte Dichtungsraupen erlauben keine optimierte Ausgestaltung eines Profils. Zudem steht für die Dichtungsraupen nur ein vergleichsweise kleines Spektrum an Elastomeren zur Verfügung. Nachteilig ist zudem, dass so aufgebrachte Dichtungsraupen sich beim Öffnen des Gehäuses ablösen und dadurch unbrauchbar werden können. Für eine Ersatzdichtung ist es dann notwendig, den Deckel bzw. die Wanne der Raupenauftragsapparatur zuzuführen. Zudem ist das Aufbringen solcher Raupen auf sehr große Gehäuse und/ oder Deckel problematisch, da hierfür aufwendige Roboter eingesetzt werden müssen.

Ein weiterer, neuerer Ansatz beruht auf modularen Dichtungen, die ein profiliertes Profil an den Ecken mit speziellen, auf dieses Profil abgestimmten Eckverbindern verstecken.

Vor diesem Hintergrund ist es wünschenswert, optimierte Gehäusedichtungen vor allem auch für mittlere bis hohe Stückzahlen wirtschaftlich herstellen und anbieten zu können.

Großformatige Batteriesysteme bzw. andere elektrochemische Speicher wie beispielsweise Superkondensatoren finden in immer mehr Applikationen Verwendung. Sie finden beispielsweise in Elektrofahrzeugen oder Hybrid-Fahrzeugen, in industriellen Traktionssystemen, wie Gabelstaplern oder Robotern, in Flurförderfahrzeugen sowie in Sport- und Freizeit-Fahrzeugen Verwendung. Weitere Anwendungen finden sich in Bahnen und Flugzeugen.

Bei all diesen Anwendungen bestehen die Batterien in der Regel aus einer Vielzahl von einzelnen Zellen, welche in einem Batteriegehäuse untergebracht sind. Typische Spannungen der so verwendeten Energiespeicher betragen bis zu 1000 V. Stromstärken von mehr als 100 A sind möglich. Typische Dimensionen der Batteriegehäuse sind 1.000 mm x 800 mm.

Das Batteriegehäuse hat die Aufgabe, die innenliegenden Komponenten vor der Umgebung zu schützen. Insbesondere ist ein Eindringen von Wasser ins Batteriegehäuse schädlich, da es bei Kontakt mit stromführenden Teilen Kurzschlüsse verursachen und mit den Aktivkomponenten der Zellen, insbesondere mit Lithium, sehr heftig reagieren kann, wobei Wasserstoffgas freigesetzt wird. Des Weiteren kann es zu einer Korrosion der Überwachungselektronik bzw. des Batterie-Management-Systems kommen.

Da Batteriesysteme sehr teuer sind, muss das Batteriegehäuse wiederholt öffenbar sein. Anderenfalls könnte beispielsweise ein loser Kontakt in der Überwachungselektronik nur nach Aufschweißen eines Batteriegehäuses repariert werden. Der Prozess des Aufschweißens birgt allerdings ein hohes Risiko, da durch das Aufschweißen temperatursensible Batteriekomponenten nachhaltig geschädigt werden können.

Die Gehäuse von großformatigen Energiespeichern bestehen in der Regel aus einer Wanne, in welcher Komponenten platziert sind, und einem Deckel. Deckel und Wanne bestehen entweder aus Metall oder auch aus hochfestem Kunststoff. Sie werden miteinander formschlüssig und dicht verbunden. Als Dichtungen kommen häufig Elastomerdichtungen zum Einsatz.

Ein Batteriegehäuse bzw. der Batteriegehäuse-Dichtungs-Verbund muss in der Regel einen Schutz vor Staub, einen Schutz vor gelegentlich von außen anstehendem Wasser und einen Schutz vor Wasser bieten, welches durch Reinigungsgeräte, beispielsweise Hochdruck-Reiniger, von außen ansteht.

Üblicherweise muss das Batteriegehäuse die Sicherheitsklasse IP 67 erfüllen. Bei diesem Test läßt man Wasser bei einem Überdruck von 0.1 bar (1 m Wassersäule) über einen Zeitraum von 30 min von außen anstehen. Nach diesem Test darf sich kein Wasser im Inneren des Batteriegehäuses befinden.

Bei besonderen Anwendungen, beispielsweise Batterien für Geländewagen oder Elektro-Schiffen, können noch weiter gehende Anforderungen notwendig sein, beispielsweise die Erfüllung der Sicherheitsklasse IP 68.

Zusätzlich kann gefordert sein, dass das Innere eines Batteriegehäuses vor elektromagnetischer Störstrahlung geschützt ist bzw. die Batterie keine elektromagnetische Störstrahlung aussendet, was ebenfalls Konsequenzen für die Ausgestaltung der Dichtung mit sich bringt.

Die Dichtung sollte darüber hinaus Toleranzen der Oberflächengüte sowie ggf. Verwindungen der Bauteile des Batteriegehäuses ausgleichen können.

Die vorgenannten Anforderungen können auch bei weiteren Anwendungen, beispielsweise bei Schaltschränken, Ladestationen für elektromobile Einrichtungen, Transformatorengehäusen und Fenstern auftreten.

Aus dem Stand der Technik sind derzeit vulkanisierte Flachdichtungen bekannt. Diese können ein Profil für optimalen Toleranzausgleich aufweisen, erlauben eine schnelle Montage und einen treppenförmigen Aufbau.

Bei diesen Dichtungen ist allerdings nachteilig, dass sie große Werkzeuge erfordern. Hiermit sind hohe Kosten verbunden. Eine Fertigung lohnt sich daher erst bei Stückzahlen von mehr als 1000 Stück. Diese Dichtungen sind auf ein Design und einen Anwender festgelegt und in der Regel auf Serienproduktionen beschränkt.

Darüber hinaus existieren anlagenbedingte Obergrenzen zur Herstellung solcher Dichtungen. So würde eine Dichtung für eine Gondel einer Windkraftanlage eine Vulkanisations-Presse bzw. ein Vulkanisations-Werkzeug mit Durchmessern von rund 10 Metern erfordern, welche technisch nicht realisiert werden können.

Bekannt ist auch, entweder auf einen Deckel oder eine Wanne eine Dichtung mittels eines Raupenauftrags aufzubringen. Hierbei ist vorteilhaft, dass solche Dichtungen auf Batteriegehäusen unterschiedlicher Größen flexibel aufbringbar sind.

Nachteilig ist, dass nahezu keine Profilierung aufgebracht werden kann, dass die Oberfläche ggf. vorbehandelt, beispielsweise entfettet oder aktiviert, werden muss, dass große Bauteile, beispielsweise Deckel, gehandhabt werden müssen und dass eine Raupenauftrags-Apparatur vorhanden sein muss.

Beim Öffnen des Batteriegehäuses wird die Dichtung in der Regel zerstört, da sie unspezifisch an Deckel bzw. Wanne festhaftet.

Des Weiteren sind aus Vollmaterial, beispielsweise Platten, gestanzte Dichtungen bekannt. Als Vollmaterial sind geschlossenporige Materialien wie Moosgummi bekannt.

Diese Dichtungen sind einfach herstellbar und verursachen nahezu keine Werkzeugkosten. Nachteilig ist allerdings, dass auf diesen kein topografisches Profil ausgestaltbar ist, um einen Toleranzausgleich herzustellen.

Des Weiteren erzeugen diese Dichtungen relativ viel Materialausschuss, da beim Ausstanzen das Restmaterial in der Mitte einer Platte nicht mehr verwendet werden kann.

Außerdem können Dickentoleranzen eines Plattenmaterials Dichteigenschaften negativ beeinträchtigen, wobei ein Druckverformungsrest auftreten kann. Bei großen Andruckflächen ist ein geringer Toleranzausgleich gegeben, bei schmalen Strukturen sind diese Dichtungen schwer zu handhaben. Darüber hinaus weisen insbesondere Schaummaterialien einen relativ ungünstigen Druckverformungsrest auf.

Bekannt sind auch Profildichtungen, welche an Stößen zusammengeklebt oder vulkanisiert werden. Diese Dichtungen erlauben die Ausbildung eines Profils. Nachteilig ist allerdings, dass vorgesehene Geometrien nach einem Materialschrumpf nicht mehr passgenau sein können. Diese Dichtungen sind des Weiteren schlecht handhabbar und nach der Vulkanisation nicht mehr variierbar.

Ein weiterer Ansatz beruht auf modularen Dichtungen, bei denen Profilstränge an Ecken mit speziellen, auf diese Profilstränge abgestimmten Eckverbindern versteckt werden. Dieser Ansatz ist in der EP 2 385 274 A1 beschrieben.

Bei diesem Ansatz ist allerdings nachteilig, dass eine Gehäusedichtung aus mehreren Komponenten besteht. Für ein rechteckiges Gehäuse werden vier Profilstränge und vier Eckverbinder, also acht Einzelteile benötigt. Winkel, welche von 90° abweichen, erfordern andere Eckverbinder. Die Eckverbinder müssen eine Mindestquerschnittsfläche aufweisen. Die Gehäuse müssen daher an den Ecken Fleisch zum Befestigen der Eckverbinder aufweisen. Dies erhöht die Herstellkosten und das Gewicht des Gehäuses. Der Ansatz erfordert eine relativ hohe Mindestdicke eines Profilstrangs, da dieser als Hohlprofil ausgestaltet ist. Daher eignet sich dieser modulare Ansatz sehr gut für den Prototypenbau. Für mittlere Stückzahlen birgt es aber erhebliche Nachteile.

Im Ergebnis ergibt sich demnach derzeit folgende Situation:
Für große Stückzahlen kann eine Dichtung perfekt dimensioniert werden. Hierfür sind aber teure Werkzeuge notwendig, so dass sich eine solche Dichtung erst bei großen Stückzahlen wirtschaftlich herstellen läßt.

Je größer das abzudichtende System ist, desto ungünstiger bzw. technisch unmöglicher ist die Herstellung einer solchen Flachdichtung.

Für Prototypen- und Vorserienstückzahlen existieren Lösungen, die aber bei Übertragung auf mittlere bis große Stückzahlen technische Probleme in sich bergen.

Die aus Vollmaterial gearbeiteten Dichtungen können nicht topografisch strukturiert werden und haben somit nur eine beschränkte Möglichkeit des Toleranzausgleichs. Zudem erfüllen sie hinsichtlich Flexibilität in Bezug auf ihre Dimensionierung in der Regel nicht die Anforderungen der Batteriehersteller.

Auf ein Grundmaterial aufgetragene Dichtungen sind in der Regel nicht topographisch ausgestaltbar und bergen das Risiko der irreversiblen Ablösung beim Öffnen eines Gehäuses.

Als weitere mögliche Applikationen sind beispielsweise industrielle Transformatoren-Gehäuse denkbar. Bei diesen Applikationen können typische Gehäuseabmessungen bis zu mehren Metern in Längs- und BreitenAusdehnung betragen. Im Inneren befindet sich Hochspannungs-Elektronik, welche durch ein Transformatoren-Öl gekühlt wird. Das Öl kann hierbei an der Dichtung anstehen.

Weitere Applikationen sind elektrische Schaltkästen oder Gehäuse von Ladegeräten, Leistungselektronik-Komponenten oder auch Gehäuse von induktiven Ladesystemen. In diesen Fällen ist die Aufgabe der Dichtung, die Elektronik im Inneren gegenüber der Umgebung (z.B. Wasser) zu schützen.

### Darstellung der Erfindung

Der Erfindung liegt daher die Aufgabe zugrunde, eine profilierte Dichtung anzugeben, die leicht befestigbar ist, wobei die profilierte Dichtung in einem Endlosprofilstrang extrudierbar und auf erforderliche Abmessungen ablängbar sowie mechanisch derart perforierbar ist, dass verschiedene Querschnitte für Ecken und breite Seiten eines Gehäuses entstehen.

Erfindungsgemäß wird die voranstehende Aufgabe mit den Merkmalen des Patentanspruchs 1 gelöst.

Erfindungsgemäß ist erkannt worden, dass bei einer solchen Dichtung separat ausgestaltete Dichtbereiche und Fixierbereiche entstehen, welche getrennte Funktionen übernehmen. Die Dichtung ist aus einem extrudierten Profilstrang gebildet, welcher mindestens zwei generelle Funktionsbereiche aufweist, nämlich einen Dichtbereich und einen Befestigungsbereich. In den Befestigungsbereich können nach der Herstellung des Profilstrangs Perforationen, insbesondere Schnitte, eingebracht werden, so dass das Profil an diesen Perforationen nach innen oder außen gebogen werden kann. Bei runden Gehäusen kann eine segmentweise Perforation durchgeführt werden. Die Abstände der Perforationen richten sich nach der Dimensionierung der Dichtung und dem Durchmesser des zu dichtenden Gehäuses. Um eine einwandfreie Dichtwirkung zu erhalten, werden im Dichtbereich keine Perforationen eingebracht.

Zwischen dem Dichtbereich und dem Fixierbereich ist ein Schutzbereich mit geringerer Dicke als der Dichtbereich und der Fixierbereich ausgebildet. Der Schutzbereich stellt sicher, dass bei der Perforation des Fixierbereichs der eigentliche Dichtbereich nicht beschädigt wird. Durch seine geringere Dicke erlaubt er dennoch eine hohe Flexibilität beim Knicken.

Folglich ist die eingangs genannte Aufgabe gelöst.

Der Dichtbereich könnte profiliert ausgebildet sein und der Fixierbereich könnte als ebener Streifen ausgebildet sein. Im Prinzip müssen profilierte Dichtungen aus einem linearen Teil mit breiter Auflage bestehen, welcher an einem Gehäuse befestigt werden kann. In den Ecken muss ein Profil mit einer relativ kleinen Querschnittsfläche ausgestattet sein, welche geringen Kurvenradien folgen kann.

Der Grundkörper könnte zusammenhängend ausgebildet sein und keine Eckverbindungen aufweisen. Hierdurch ist die Dichtung aus einem einzigen Profilstrang herstellbar, der lediglich an seinen Enden verbunden ist. Es sind keine weiteren Bauteile zur Fertigung einer profilierten Dichtung nötig, welche Ecken und Rundungen umlaufen kann.

Der Fixierbereich könnte teilweise mit Perforationen versehen sein, die als Schnitte und/ oder Perforationen mit runden oder abgerundeten Spitzen ausgebildet sind, wobei der Dichtbereich teilweise gekrümmt ist. Die Schnitte erlauben, die profilierte Dichtung zu krümmen, um Ecken und Rundungen zu umlaufen.

Der Dichtbereich könnte bei Druckbeaufschlagung einer Dichtungsfläche konvex auswölbbar sein. Hierdurch ist eine zuverlässige Abdichtung möglich. Die Dichtung funktioniert insbesondere, wenn sie bei Krafteinwirkung von oben nach außen ausweicht.

Im Dichtbereich könnte ein innen liegender, vom Profilstrangmaterial umschlossener Hohlraum ausgebildet sein. Hierdurch wird die Auswölbung der Dichtung bei Druckbeaufschlagung erleichtert.

Am Dichtbereich könnten abragende Dichtwülste ausgebildet sein. Die Dichtwülste können parallel zueinander orientiert sein. Die Dichtwülste können als Dichtlippen ausgestaltet sein, welche sich bei Druckbeaufschlagung anpassen. Es sind Geometrien denkbar, welche bei Druckbeaufschlagung gezielt umklappen. Auf der dichtenden Oberfläche des Dichtbereiches können durchgängige Längsgeometrien, insbesondere Rippen, aufgebracht sein, welche die Dichtwirkung weiter verbessern.

Der Fixierbereich könnte Durchgänge für Schrauben, Hülsen, Nieten oder Steckverbindungen aufweisen. Hierdurch ist die Dichtung ohne Beeinträchtigung des Dichtbereichs an einem Gehäuse festlegbar. Die Anbringung der Dichtung auf die Oberfläche eines Gehäuses kann rein mechanisch erfolgen, aber auch unterstützt z.B. durch Kleber, Klebebänder oder Ähnliches.

In der Elastomermatrix des Profilstrangmaterials könnten elektrisch leitfähige Komponenten auf Kohlenstoff- oder Metallbasis eingebracht sein. So kann elektromagnetische Störstrahlung aus dem Inneren eines Batteriegehäuses abgeschirmt werden.

Beidseitig des Dichtbereichs könnte jeweils ein Fixierbereich ausgebildet sein. Eine solche Ausführung ist vorteilhaft bei sehr großen Gehäuseabmessungen, da die Dichtung von beiden Seiten fixiert werden kann.

Die Dichtung könnte reibungsreduzierende Mittel aufweisen. Die Oberfläche zumindest des Dichtbereichs könnte derart oberflächenbehandelt sein, dass dieser eine geringe Reibung aufweist. Eine Oberflächenbehandlung kann insbesondere eine plasmainduzierte Beschichtung mit reibungsreduzierendem Polymer oder anorganischen Partikeln sein.

Es ist auch denkbar, nachträglich eine reibungsreduzierende Folie, insbesondere aus Polytetrafluorethylen, oder Öl oder Fette, insbesondere in dafür vorgesehene Aussparungen, anzubringen.

Durch diese Behandlung kann die beschriebene Dichtung auch für dynamische Anwendungen eingesetzt werden, besonders wenn diese großformatige Systeme abdichtet und die Relativgeschwindigkeit von Bauteilen, die an der Dichtung anliegen, 10 m/s nicht übersteigt. Dieser Fall kann bei der Abdichtung der Gondel von Windkraftanlagen gegenüber dem starren Turm auftreten. Das Schloss der Dichtung kann durch Vulkanisation oder Verklebung geschlossen werden. Idealerweise befindet sich das Schloss der Dichtung im Bereich der Profilstänge und nicht im Bereich der Ecken. Dadurch wird sicher gestellt, dass das Schloss nicht zusätzlich durch Biegung belastet wird.

Ein Batteriegehäuse könnte eine Dichtung der hier beschriebenen Art enthalten. Die Dichtung ist für ein großformatiges Gehäuse, z.B. ein Batteriegehäuse, oder ein Gehäuse für einen anderen elektrochemischen Energiespeicher geeignet.

Die Dichtung ist auch für andere statisch abzudichtende Systeme, geeignet. Beispiele für andere statisch abzudichtende Systeme sind Transformatoren, Schaltkästen, Gehäuse von Ladegeräten, Leistungselektronik-Komponenten oder auch Gehäuse von induktiven Ladesystemen.

Darüber hinaus kann die Dichtung bei großformatigen dynamischen Anwendungen eingesetzt werden. Denkbar ist hier eine Gondeldichtung für Windkraft-Anlagen, wenn Relativitätsgeschwindigkeiten von weniger als 10 m/s auftreten.

Vor diesem Hintergrund könnte das Gehäuse eine Dichtung der hier beschriebenen Art umfassen, wobei dessen Innenraum ein Medium enthält, welches durch die Dichtung gehindert ist, nach außen zu treten. So können Umweltschäden, beispielsweise durch einen Motor oder einen Transformator, vermieden werden.

Ein Gehäuse könnte auch eine Dichtung der hier beschriebenen Art umfassen, wobei dessen Innenraum gegenüber von außen anstehenden Medien abgedichtet ist. So können Teile im Innenraum vor schädlichen Umwelteinflüssen geschützt werden.

Ein Gehäuse der hier beschriebenen Art könnte in einer dynamischen Anwendung verwendet werden, wobei die Dichtung dynamisch beansprucht wird. Die Dichtung soll den Innenraum gegenüber von außen anstehenden Medien schützen. Die dynamisch beanspruchte Dichtung kann so an zwei relativ zueinander beweglichen Teilen anliegen und einen Innenraum abdichten.

### Kurzbeschreibung der Zeichnung

In der Zeichnung zeigen
- Fig. 1: eine Dichtung des Stands der Technik, bei welcher Profilstränge mit Eckverbindern verbunden sind, wobei die Eckverbinder als Eckprofile mit kleiner Auflagefläche und die Profilstränge als Linearprofile mit großer Auflagefläche ausgestaltet sind,
- Fig. 2: ein extrudierter endloser Profilstrang, der abgelängt werden kann, um eine Dichtung zu erzeugen, wobei der Profilstrang je einen longitudinalen Dichtbereich und Fixierbereich aufweist,
- Fig. 3: in der oberen Ansicht eine perspektivische Ansicht einer Dichtung und in der unteren Ansicht eine Draufsicht auf die Dichtung, wobei die Dichtung mit Bohrungen zur Fixierung versehen ist und wobei die Dichtung im Kraftnebenschluss oder Krafthauptschluss platzierbar ist,
- Fig. 4: ein extrudierter endloser Profilstrang, der abgelängt werden kann, um eine Dichtung zu erzeugen, wobei der Profilstrang je einen longitudinalen Dichtbereich und Fixierbereich aufweist und wobei der Dichtbereich durch einen Schutzbereich vom Fixierbereich getrennt ist,
- Fig. 5: vier Schnittansichten von vier unterschiedlich profilierten Dichtungen, wobei die Dichtung A ein Profil mit einer Kaverne, die Dichtung B ein Profil mit einer Kaverne und zwei zusätzlichen Dichlippen, die Dichtung C ein Profil mit zwei Dichtlippen und die Dichtung D ein Profil mit einer Klapplippe aufweist,
- Fig. 6: vier weitere Schnittansichten von vier weiteren unterschiedlich profilierten Dichtungen,
- Fig. 7: eine Draufsicht auf eine Dichtung, bei welcher der Fixierbereich mit Schnitten, nämlich Einschnitten, versehen ist,
- Fig. 8: zwei mit unterschiedlich ausgeformten Schnitten versehene Dichtungen, wobei in der rechten Ansicht gezeigt ist, wie die Dichtungen geklappt werden können, nämlich entweder nach außen (obere Ansicht) oder nach innen (untere Ansicht), wobei der Klappwinkel 90° beträgt, aber auch geringer sein kann,
- Fig. 9: eine Dichtung für ein rundes Gehäuse, wobei der Fixierbereich derart geschnitten ist, dass dessen ungeschnittenen Abschnitte in radialer Richtung sternförmig vom Dichtbereich abragen, und
- Fig. 10: ein Batteriegehäuse mit einer hier beschriebenen Dichtung.

### Ausführung der Erfindung

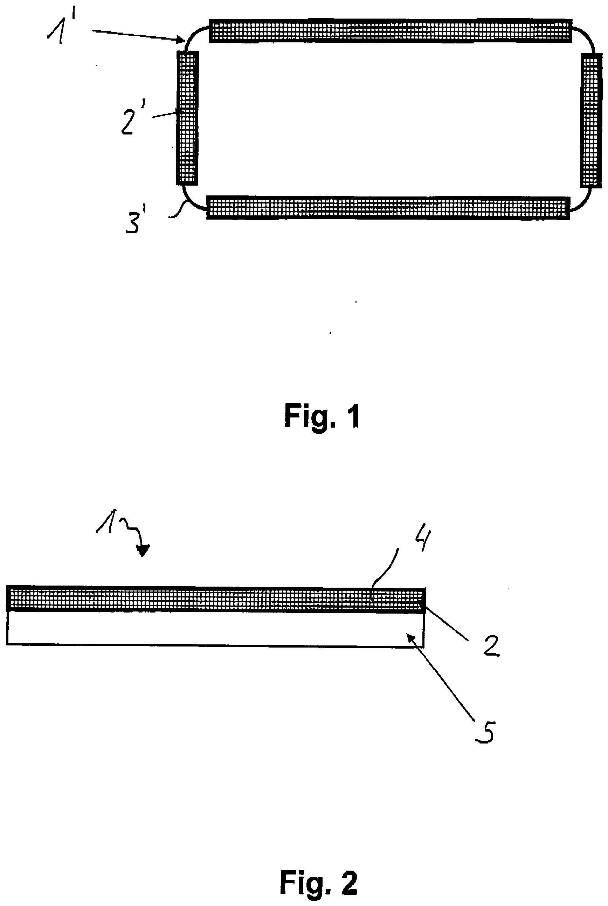

Fig. 1 zeigt eine Dichtung des Stands der Technik, umfassend einen Grundkörper 1', der aus einem extrudierten Profilstrang 2' gefertigt ist. Vier Profilstränge 2' sind durch vier Eckverbinder 3' miteinander verbunden.

Fig. 2 zeigt eine Dichtung für ein Gehäuse 12, umfassend einen Grundkörper 1, der aus einem extrudierten Profilstrang 2 gefertigt ist. Der Grundkörper 1 weist einen Dichtbereich 4 und einen Fixierbereich 5 auf. wobei der Fixierbereich mit Perforationen versehen ist. Der Dichtbereich 4 ist profiliert ausgebildet und der Fixierbereich 5 ist als ebener Streifen ausgebildet.

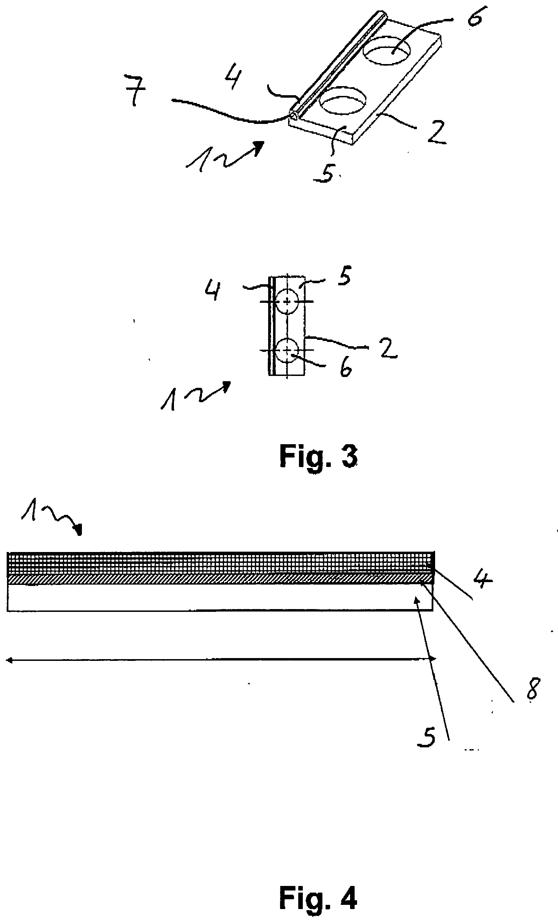

Fig. 3 zeigt in der oberen Ansicht eine Dichtung für ein Gehäuse 12, umfassend einen Grundkörper 1, der aus einem extrudierten Profilstrang 2 gefertigt ist. Der Grundkörper 1 weist einen Dichtbereich 4 und einen Fixierbereich 5 auf, wobei der Fixierbereich 5 mit Durchgängen 6 versehen ist. Die untere Ansicht von Fig. 3 zeigt eine Draufsicht auf die Dichtung. Der Dichtbereich 4 ist profiliert ausgebildet und der Fixierbereich 5 ist als ebener Streifen ausgebildet.

Denkbar ist auch, dass sich auf beiden Seiten des Dichtbereichs zwei separate Fixierbereiche befinden. Diese können gleich ausgeführt sein, so dass ein symmetrischer Querschnitt entsteht, aber auch unterschiedlich, beispielsweise in der Breite. Eine solche Ausführung ist vorteilhaft bei sehr großen Gehäuseabmessungen, da die Dichtung von beiden Seiten fixiert werden kann.

Der Dichtbereich 4 ist bei Druckbeaufschlagung einer Dichtungsfläche konvex auswölbbar. Im Dichtbereich 4 ist ein innen liegender, vom Profilstrangmaterial umschlossener Hohlraum 7 ausgebildet.

Der Fixierbereich 5 weist Durchgänge 6 für Schrauben, Hülsen, Nieten oder Steckverbindungen auf. In der Elastomermatrix des Profilstrangmaterials können elektrisch leitfähige Komponenten auf Kohlenstoff- oder Metallbasis eingebracht sein.

Fig. 4 zeigt, dass zwischen dem Dichtbereich 4 und dem Fixierbereich 5 ein Schutzbereich 8 mit geringerer Dicke als der Dichtbereich 4 und der Fixierbereich 5 ausgebildet ist. Die Dichtung kann reibungsreduzierende Mittel aufweisen.

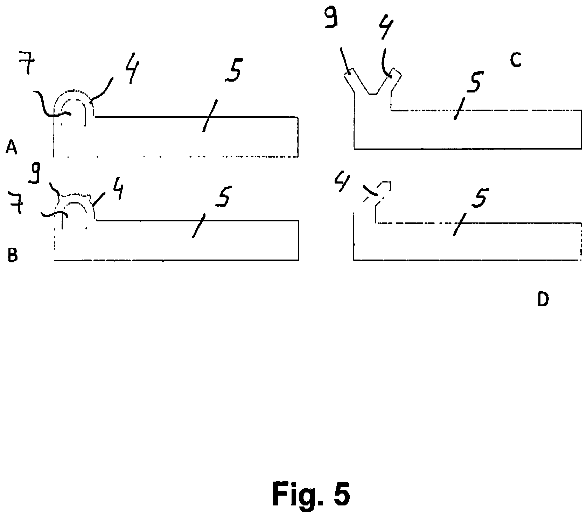

Fig. 5 zeigt vier verschiedene Dichtungen, bei welchen der Dichtbereich 4 jeweils unterschiedlich profiliert ist. Die Dichtung A weist einen bogenförmigen Dichtbereich 4 auf. Die Dichtung B zeigt einen bogenförmigen Dichtbereich 4, an welchem abragende Dichtwülste 9 ausgebildet sind. Die Dichtung C zeigt einen Dichtbereich 4, an welchem abragende Dichtwülste 9 ausgebildet sind. Die Dichtung D zeigt einen Dichtbereich 4, an welchem nur ein abragender Dichtwulst 9 ausgebildet ist.

Dichtung A zeigt ein Hohlkammerprofil. Bei Druck-Beaufschlagung gibt dieses gezielt nach. Dichtung B zeigt ein Hohlkammerprofil mit zusätzlich angebrachten longitudinalen Dichtlippen. Gegenüber der Dichtung A erlaubt diese einen weiter erhöhten Toleranzausgleich. Dichtung C zeigt ein Narrenkappenprofil. Hierdurch stellt sich eine beidseitige Abdichtung ein. Diese Dichtung ist besonders bei sowohl von außen als auch innen anstehenden Überdrücken sowie bei Dicken unter 5 mm geeignet. Dichtung D zeigt ein Angelhakenprofil. Die ist eine besonders platzsparende Ausführung. Es sind besonders enge Kurvenradien möglich sowie Dicken unter 5 mm. Darüber hinaus ist diese Dichtung vorteilhaft bei dynamischen Applikationen und gleichzeitig nur moderater Medienbelastung. Ebenso ist dieses Profil vorteilhaft, wenn eine Verbindung in den Eckbereichen gewünscht ist.

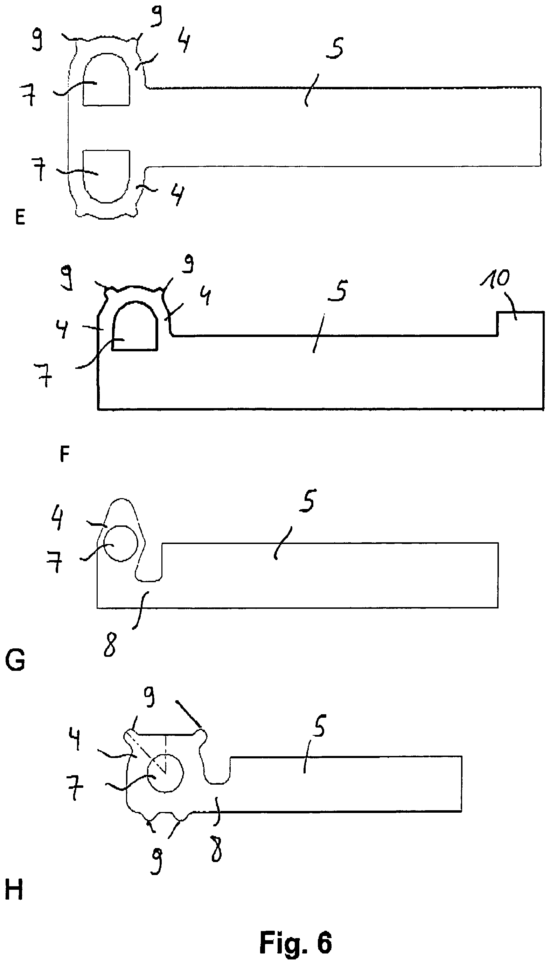

Fig. 6 zeigt vier weitere verschiedene Dichtungen, bei welchen der Dichtbereich 4 jeweils unterschiedlich profiliert ist. Die Dichtung E weist zwei gegenüberliegende bogenförmige Dichtbereiche 4 auf, von denen jeweils zwei parallel angeordnete Dichtwülste 9 abragen. Die Dichtung F zeigt einen bogenförmigen Dichtbereich 4, an welchem abragende Dichtwülste 9 ausgebildet sind. Am Fixierbereich 5 ist eine stufenförmige Erhebung 10 ausgebildet. Die Dichtung G zeigt einen Dichtbereich 4, der durch einen verjüngten Schutzbereich 8 vom Fixierbereich 5 abgesetzt ist. Die Dichtung H zeigt einen Dichtbereich 4, von welchem beidseitig je zwei parallele Dichtwülste abragen 9. Die Dichtung H zeigt einen Dichtbereich 4, der durch einen verjüngten Schutzbereich 8 vom Fixierbereich 5 abgesetzt ist.

Dichtung E zeigt eine Hohlkammeranordnung in Form einer Acht. Dies ist besonders vorteilhaft bei beidseitig sehr unebenen Gehäuseteilen bzw. zur Überbrückung hoher Dicken. Dichtung F zeigt ein Profil mit zusätzlichem Stopper, welcher im fixierten Zustand den Fixierbereich 5 zusätzlich festhält. Dadurch kann ein Flattern nicht erfolgen. Dichtung G zeigt ein Profil mit einem zwischen Dichtbereich 4 und Fixierbereich 5 platzierten, tiefer eingeschnittenem Schutzbereich 8. Dichtung H zeigt ein Profil mit zusätzlich auf beiden Seiten angebrachten longitudinalen Dichtwülsten 9.

Dichtung F zeigt ein Profil mit einem Fixierbereich 5 und einem Stopper, der als stufenförmige Erhebung 10 ausgestaltet ist. Der Stopper wird bei einer gewollten Perforation mit durchtrennt. Er steht aber danach in den linearen Teilen als Festhalter der Dichtung zur Verfügung.

Die Dichtung G zeigt ein Profil, bei welchem ein Schutzbereich 8 zwischen Dichtbereich 4 und Fixierbereich 5 ausgebildet ist. Dieser Schutzbereich 8 weist eine geringere Dicke auf. Die Aufgabe des Schutzbereiches 8 ist es, die Perforation des Fixierbereiches 5 zu erleichtern, ohne dass dabei der Dichtbereich 4 zu Schaden kommt. Es soll kein versehentliches Verletzen des Dichtbereiches 4 auftreten. Zudem wird durch die geringe Dicke in der Nachbarschaft des Profils eine Ausführung enger Kurvenradien erleichtert.

Dichtung H zeigt ein Profil mit longitudinal angeordneten Dichtwülsten 9, welche sowohl nach oben als auch nach unten abragen. Das Profil der Dichtung H zeigt im Dichtbereich 4 angeordnete Dichtwülste 9. Diese erlauben einen verbesserten Toleranzausgleich sowohl einem Gehäuse als auch einem Deckel gegenüber. Die Ausführung von zwei parallel angeordneten Dichtwülsten 9 verbessert die Zuverlässigkeit der Abdichtung eines Schutzbereiches 8 zwischen Dichtbereich 4 und Fixierbereich 5.

Eine Implementierung eines Stoppers in Analogie zur Dichtung F ist auch bei den anderen in Fig. 5 und Fig. 6 gezeigten Dichtungen möglich.

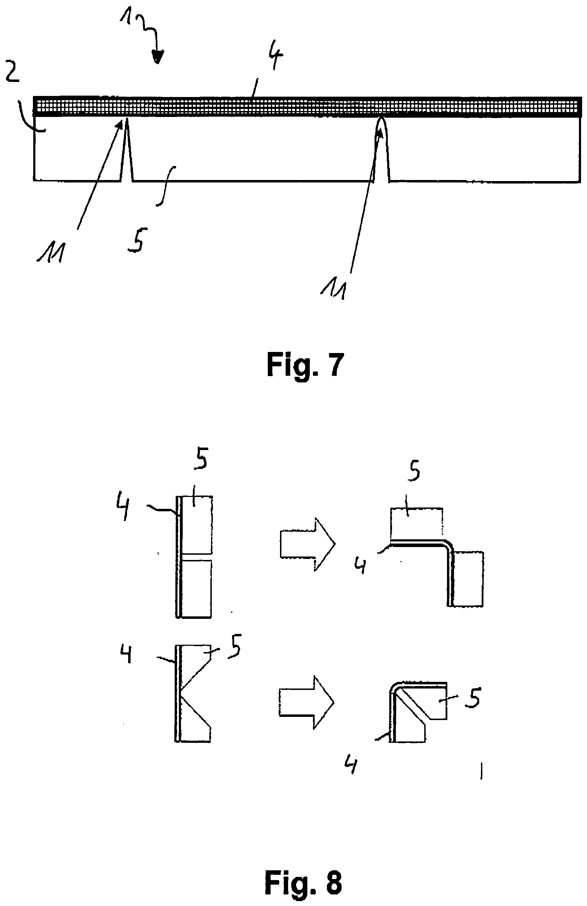

Fig. 7 zeigt eine Dichtung für ein großes Gehäuse, umfassend einen Grundkörper 1, der aus einem extrudierten Profilstrang 2 gefertigt ist. Der Grundkörper 1 weist einen Dichtbereich 4 und einen Fixierbereich 5 auf, wobei der Fixierbereich 5 mit Perforationen 11 versehen ist. Die Perforationen 11 sind als Schnitte, nämlich als Einschnitte, ausgebildet.

Die Perforationen 11 können dabei als Schnitte mit spitzen Enden oder auch als Perforationen 11 mit abgerundeter Spitze ausgestaltet sein. Die Ausführung einer runden Spitze hat den Vorteil, dass sich keine mechanisch hohe Belastung and der Spitze einstellen kann. Die Weiterrreißfestigkeit ist dadurch gegenüber einer Spitze mit spitzem Ende deutlich erhöht. In Fig. 7 sind beide Möglichkeiten schematisch dargestellt.

Fig. 8 zeigt in der oberen Ansicht eine Dichtung mit einem im Querschnitt rechteckigen Einschnitt, welche mit ihrem Dichtbereich 4 nach außen geklappt wird. Fig. 8 zeigt in der unteren Ansicht eine Dichtung mit einem im Querschnitt dreieckigen Einschnitt, welche mit ihrem Dichtbereich 4 nach innen geklappt wird. Die Dichtung bildet nach dem Einklappen einen rechten Winkel aus und kann so Eckbereiche abdichten.

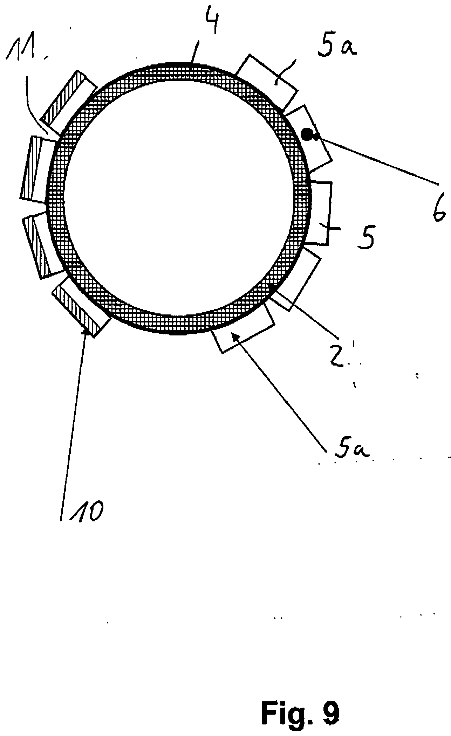

Fig. 9 zeigt eine Dichtung für ein rundes Gehäuse, wobei der Fixierbereich 5 derart geschnitten ist, dass dessen ungeschnittene Abschnitte 5a in radialer Richtung sternförmig vom Dichtbereich 4 abragen. In den ungeschnittenen Abschnitten 5a sind Bohrungen 6 ausgebildet. Die ungeschnittenen Abschnitte 5a können an ihrem radial äußeren Ende eine stufenförmige Erhebung aufweisen, welche als Stopper dient. Der Grundkörper 1 ist zusammenhängend ausgebildet und weist keine Eckverbindungen auf. Der Fixierbereich 5 ist teilweise mit Perforationen 11 versehen, die als Schnitte ausgebildet sind, wobei der Dichtbereich 4 teilweise gekrümmt ist.

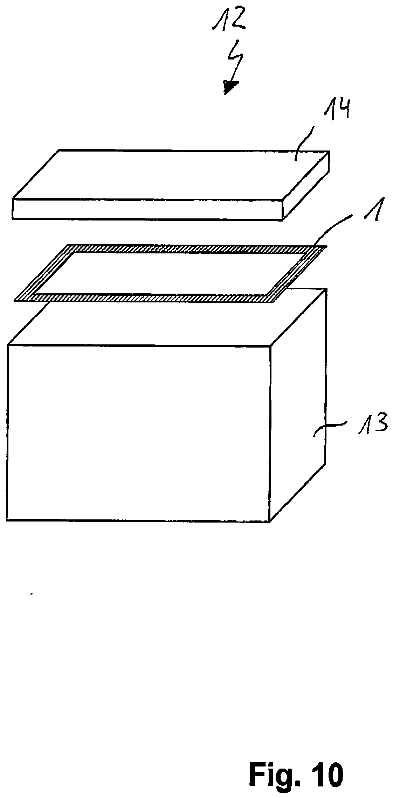

Fig. 10 zeigt ein Gehäuse 12, nämlich ein Batteriegehäuse, enthaltend eine Dichtung mit einem Grundkörper 1. Fig. 1 zeigt ein Gehäuse 12 mit drei wesentlichen Komponenten, nämlich einer Wanne 13, einem Deckel 14 und einer dazwischen liegenden Dichtung mit einem Grundkörper 1.

Fig. 10 zeigt ein Gehäuse 12, umfassend eine Dichtung, wobei dessen Innenraum ein Medium enthalten kann, welches durch die Dichtung gehindert ist, nach außen zu treten. Das Gehäuse 12, umfasst eine Dichtung, wobei dessen Innenraum gegenüber von außen anstehenden Medien abgedichtet ist. Das Gehäuse 12 kann in einer dynamischen Anwendung verwendet werden, wobei die Dichtung dynamisch beansprucht wird.

Prinzipiell können auch verschweißte Systeme als Batteriegehäuse infrage kommen. Ein auseinanderbaubarer Aufbau stellt aber sicher, dass bei Defekten innerhalb einer Batterie, beispielsweise bei losen Kontakten oder einer Leckage des Kühlsystems, das Batteriegehäuse geöffnet und der Schaden behoben werden kann. Bei einem verschweißten Batteriegehäuse würde auch ein kleinerer Defekt dazu führen, dass die komplette hochpreisige Batterie außer Betrieb genommen werden müsste.

Die Dichtungen, welche als Profildichtungen ausgestaltet sind, können aus bestimmten Werkstoffen bestehen. Da lediglich zeitweise Wasser von außen anstehen kann, können neben den bekannten Wasser-Dichtungs-Komponenten wie EPDM auch NBR-Elastomere verwendet werden.

NBR ist vorteilhaft, da er nach Extrusion nur einen geringen Schrumpf aufweist und somit auch abgelängt gelagert werden kann. Für Sonderanwendungen können auch Elastomere aus HNBR, Fluor-Kautschuk, Silikon-Kautschuk, ACM-Kautschuk oder aus anderen Elastomer-Materialien verwendet werden.

Typische Härten der Dichtungen betragen 50 - 80 Shore. Für Anwendungen, bei denen ein Gehäuse 12 abgedichtet werden soll, außerhalb bzw. innerhalb dessen sich Öl befindet, können gezielt ölbeständige Werkstoffe für die Dichtungen verwendet werden. Hierzu bietet sich für moderate Bedingungen NBR an. Für erhöhte Temperaturen kann auf HNBR, ACM oder auch FKM zurückgegriffen werden. FKM ist beispielsweise für Transformatoren-Gehäuse, bei denen die Dichtung in Kontakt mit dem Transformatorenöl kommen kann, ein geeigneter Werkstoff.

Das in Fig. 10 abgebildete Gehäuse 12 wurde im Inneren mit einem Unterdruck beaufschlagt und in Wasser gelagert. Während des Versuchs wurde der zuvor aufgebaute Druck aufgezeichnet, um so zusätzlich zu einer nachfolgenden visuellen Kontrolle über einen eventuellen Druckverlust auf eine Leckage oder Undichtigkeit rückschließen zu können.

Die Testprozedur lehnt sich an die in einer Norm beschriebene IP 67 an. Bei dieser darf von außen anstehendes Wasser mit einem Druck von 0.1 bar (entsprechend 1 m Wassersäule) nach einer Zeit von 30 min nicht zu einer Undichtigkeit der Dichtung führen.

Als Dichtung wurde in den durchgeführten Versuchen jeweils eine Dichtung mit verschiedenen Querschnitten, wie sie in Fig. 5 mit A bis D bezeichnet sind, verwendet. Die Härte des Dichtungsmaterials ist Shore 70. Aufgrund der relativ anspruchslosen Umgebungsbedingungen können die profilierten Dichtungen aus herkömmlichen Elastomeren wie EPDM oder NBR bestehen. Das hier verwendete NBR hat den Vorteil, dass nach Ablängung und Lagerung der profilierten Dichtung in der Regel kein Längenschrumpf zu beobachten ist. Für harschere Umgebungen, insbesondere heißes Öl, können höherwertige Elastomere, z.B. HNBR, ACM oder FKM, verwendet werden. Besonderen Anforderungen bei tiefen Temperaturen von weniger als -30 °C können beispielsweise Elastomer-Werkstoffe aus EPDM oder FKM gerecht werden. Solche Anforderungen treten z.B. bei Batteriesystemen auf, welche als Back-Up-Systeme bei Eisenbahnen verwendet werden.

Im Prinzip müssen profilierte Dichtungen aus einem linearen Teil mit breiter Auflage bestehen, welcher mit dem Gehäuse befestigt werden kann. In den Ecken muss das Profil mit einer relativ kleinen Querschnittsfläche ausgestattet sein, welche geringen Kurvenradien folgt. Bisher war es nicht möglich, mit Hilfe eines kontinuierlich extrudierten Profils, zwei unterschiedliche Querschnitte zu realisieren. Folglich wurden Dichtungen segmentiert aufgebaut, was wiederum eine hohe Anzahl von Steck- / Klebe - / Vulkanisier-Stellen erforderte.

In den Fixierbereich 5 werden Löcher oder Bohrungen eingebracht, wodurch die profilierte Dichtung an das Gehäuse bzw. den Deckel 14 fixiert werden kann. Durch Anbringung von Hülsen definierter Höhe kann ein definierter Anpressdruck auf die Dichtung eingestellt werden. Alternativ kann der definierte Anpressdruck auf die Dichtung durch die Dicke des Fixierbereichs 5 eingestellt werden.

Das oben genannte Eckenproblem wird dadurch gelöst, dass in den Fixierbereich 5 gezielt Schnitte oder Perforationen eingebracht werden. Dadurch kann die profilierte Dichtung nach innen oder nach außen und auch nach innen und außen geknickt und fixiert werden. Hierbei kann zugleich ein enger Kurvenradius, der nur durch das Profil selbst gegeben ist, erzielt werden.

Die Perforationen 11 können dabei als einfache Schnitte, insbesondere spitze Schnitte, angebracht werden. Dies ist besonders einfach umzusetzen, da keine speziellen Werkzeuge notwendig sind. Allerdings kann hier das Problem verminderter Weiterreißbeständigkeit auftreten, wobei bei mechanischer Belastung die Schnittspitze das Profil beschädigen kann. Als Alternative, besonders für technisch anspruchsvolle und zuverlässige Applikationen, sind daher Perforationen 11 bevorzugt, deren innere Spitze abgerundet ist. Sogenannte runde Schnitte führen zu einer verminderten lokalen Belastung und daher zu einer deutlich geringeren Tendenz des Weiterreißens. Bevorzugte Krümmungsradien sind solche oberhalb von 0.5 mm.

Folgende Profile wurden hergestellt:
Die Dicken des Dichtbereichs 4 im unbelasteten Zustand betragen 6 mm, die des Fixierbereiches 5 betragen 4 mm. Dünnere Ausführungen sind machbar, insbesondere bei Profilen ohne Hohlraum 7. Die Stöße wurden jeweils im linearen Teil entweder mit Klebstoff fixiert oder stoßvulkanisiert. Für beide Fixierungstechniken zeigten sich in den nachfolgenden Experimenten keine Unterschiede. Die Verbindung im linearen Teil ist vorteilhaft, da bei Druckbeaufschlagung beide Seiten der Klebung sich in gleicher Weise verformen und dementsprechend auf die Klebestelle keine zusätzliche Belastung einwirkt. Eine Ablängung sowohl senkrecht zum Grundkörper 1 bzw. zum Profil als auch schräg, beispielweise unter einem Winkel von 45°, zeigte keine Unterschiede in der Dichtwirkung.

Denkbar ist hierbei auch, den Fixierbereich 5 überlappend zu gestalten und dadurch eine größere Klebefläche zu erhalten bzw. Schrauben durch den in diesem Bereich doppellagigen Fixierbereich 5 anzubringen. Denkbar ist auch, den Stoß der Dichtungen im Bereich der Ecken zu verbinden. Hierbei sollte allerdings die Relativbewegungen beider Stöße bei Druckbeaufschlagung berücksichtigt werden. Eine solche Verbindung eignet sich demnach vor allem für Dichtungen mit geringer bis moderater Verformung sowie einfachem Querschnitt.

Die nachfolgende Tabelle gibt eine Übersicht über die durchgeführten Versuche und deren Ergebnisse. In jedem Beispiel wurde ein innerer Unterdruck von 0,2 bar angelegt. Die Testdauer betrug 1 und 24 Stunden. Die Dichtkontrolle erfolgte sowohl visuell als auch durch Erfassung des Druckanstiegs.

Typische Werte der Profilbreiten lagen im Bereich 10 bis 25 mm Die unverpresste Profildicke lag im Bereich 3 bis 7 mm. Die Dicke im Schutzbereich 8 bei 1.0 bis 1.5 mm.

Materialien waren 70 NBR oder 70 EPDM. Für Anwendungen mit höheren Temperatur-Anforderungen sind auch weitere Elastomere denkbar (HNBR, ACM, FKM, VMQ. Solche Anforderungen sind für Batteriegehäuse dann relevant, wenn die Dichtung bei im Störfall aus den Zellen abgeblasenen Zersetzungsprodukten mit diesen in Kontakt kommen kann.

| | Dichtung A | Dichtung B | Dichtung C | Dichtung D | Dichtung E | Dichtung F | Dichtung G | Dichtung H | Moosgummi |
|---|---|---|---|---|---|---|---|---|---|
| Wasser | **++** | **++** | **++** | **++** | **++** | **++** | **++** | **++** | **0** |
| Wasser mit Spülmittel | **++** | **++** | **++** | **++** | **+** | **++** | **++** | **++** | **-** |
| Wasser bei 70 °C | **++** | **++** | **++** | **++** | **+** | **++** | **++** | **++** | **-** |
| Toleranz, Deckel | **+** | **++** | **++** | **++** | **+** | **++** | **++** | **++** | **-** |

| | | | | | | | | | |
|---|---|---|---|---|---|---|---|---|---|
| ++ = keine Leckage nach 24 Stunden + = keine Leckage nach 1 Stunde; leichte visuelle Leckage nach 24 Stunden 0 = leichte visuelle Leckage nach 1 Stunde - visuelle Leckage bei 1 Stunde und messbarer Druckaufbau bei 24 Stunden | | | | | | | | | |

Eine Dichtung muss auch gegen Wasser, welches mit Reinigungsmittel versetzt ist, dicht sein. Dies tritt in der Realität auf, wenn das Batteriegehäuse im Unterboden eines Fahrzeuges platziert ist und das Fahrzeug durch eine Waschanlage fährt.

Besonders kritisch ist hierbei, dass die in Reinigungsmitteln enthaltenen Tenside bzw. Netzmittel die Oberflächenspannung des Wassers herabsetzen und dadurch die Durchdringung des Wassers an oberflächennahen Leckagepfaden vereinfachen.

Hierzu wurde folgendes Experiment durchgeführt:
Wasser wurde versetzt mit Spülmittel "Pril-Orginal" (Fa. Henkel) in einer Konzentration von 0,5 ml/l und die Mischung wurde gut verrührt.

Des weiteren wurde überprüft, ob das System auch gegenüber warmem Wasser dicht ist. Dabei wurden die zuvor genannten Experimente in einem durch einen Thermostat beheizten Becken wiederholt.

Bei einem weiteren Experiment wurde der Einfluss der Toleranz eines sich verziehenden Deckels 14 auf die Dichtwirkung überprüft. Dabei wurden Hülsen mit unterschiedlichen Längen in die Befestigungsschrauben platziert.

Darüber hinaus wurde geprüft, ob das System auch bei innerem Überdruck dicht ist. Dies kann für Batterien relevant sein, da bei der Öffnung einzelner Zellen im Schadensfall eine Gasentwicklung durch toxische und/ oder brennbare Gase unter deutlichem Druckanstieg stattfindet. Eine Dichtung sollte diesem inneren Überdruck standhalten können.

Dazu wurde das System Batteriegehäuse-Dichtung im Wassertank in vier Experimenten mit den oben genannten profilierten Dichtungen der Querschnitte A bis H mit einem inneren Überdruck von 2 bar über einen Zeitraum von 2 Stunden beaufschlagt. Während dieser Zeit traten kein Druckverlust bzw. keine sichtbare Bläschenentwicklung an der Dichtung auf.

Darüber hinaus wurden zyklische Druckschwankungen simuliert. Druckschwankungen treten in Batteriegehäusen bei Temperaturunterschieden oder Berg- und Talfahrten auf, wenn das Batteriegehäuse an sich hermetisch abgeschlossen ist.

Um dies zu simulieren, wurde das System im Wassertank in einem Rhythmus von einer Minute abwechselnd von einem Überdruck von 1 bar auf einen Unterdruck von 0.1 bar gebracht. Nach 2 Stunden und 120 Lastwechseln wurde das System zunächst für eine Stunde einem konstanten Unterdruck von 0.1 bar und anschließend einem konstanten Überdruck von 1 bar ausgesetzt.

Bei beiden Tests traten bei der Verwendung der Dichtungen A bis H keinerlei Druckänderung bzw. keine sichtbare Leckage, beispielsweise Wassertröpfchen oder Luftbläschen, auf. Die im Vergleich getestete Dichtung aus Moosgummi zeigte hingegen bereits im Anfangszustand deutliche Undichtigkeiten, die mit zunehmender Zahl der Lastwechsel noch zunahmen. Es kam zu einer vermehrten Bläschenbildung bei angelegtem inneren Überdruck.

Die vorliegenden Ausführungen lassen sich auf weitere Systeme / Anwendungen ausdehnen:
Anwendungen, welche einen Innenraum permanent gegenüber einem Außenraum schützen sollen. Hierbei kann der Außenraum mit Gas, wässrigem oder ölbasiertem Medium beaufschlagt sein. Je nach Medium und
Umgebungsbedingungen wie bspw. die Temperatur muss der Werkstoff der Dichtung ausgelegt sein. Solche Anwendungen können beispielsweise Schaltschränke oder Schutzgehäuse sein, in deren Innerem sich empfindliche Bestandteile oder Bauteile befinden. Anwendungen hierfür sind zum Beispiel Gehäuse für Leistungselektronik-Komponenten für Elektrofahrzeuge, beispielsweise Ladegeräte oder Wandler. Weitere Anwendungen sind elektrische Schaltkästen sowie Gehäuse von induktiven Ladesystemen.

Anwendungen, welche einen Außenraum permanent gegenüber einem Innenraum schützen sollen bzw. die sicherstellen sollen, dass ein Medium nicht aus dem Innenraum gelangen kann. Solche Anwendungen können beispielsweise Transformatoren, Motoren, Getriebe oder Tanks sein. Dabei stellt das Medium im Innenraum entweder eine Systemkomponente, wie Schmieröl, Treibstoff, Kühlflüssigkeit o.ä. dar, oder aber eine Komponente, die im Inneren gespeichert oder gelagert wird.

Das Dichtkonzept kann des Weiteren auch bei Dichtungen eingesetzt werden, welche großformatige dynamische Systeme abdichten. Ein Beispiel hierfür ist eine Dichtung der Gondel von Windkraft-Anlagen gegenüber einem Sockel. Diese Dichtung hat in der Regel Längen von 50 cm bis zu > 5 Metern. Längen von 50 cm treten bei Mini-Windkraft-Anlagen auf, Längen bis zu > 5 Meter treten bei großformatigen Windkraft-Anlagen auf. Die dynamischen Geschwindigkeiten überschreiten in der Regel 10 m/sec nicht.

Hierzu wurden in einem Versuch jeweils eine 1 m lange Dichtung B und D abgelängt und der nach außen ragende Fixierbereich 5 alle 2 cm perforiert und mit jeweils einem Durchgang 6 ausgestattet. Die so erhaltene, auf eine Unterlage aufgebrachte kreisförmige Dichtung wurde an den Stößen vulkanisiert.

Analog wurde mit einer Dichtung C vorgegangen, wobei in diesem Fall in den Freiraum zwischen den beiden Dichtwülsten 9 zusätzlich Fett ("KlüberSynth BHP 72-102", Fa. Klüber, Deutschland) eingebracht wurde, um die Reibung der Dichtung zu reduzieren.

Die Dichtung wurde auf einen Zylinder mit umgestülptem Rand (Topf) aufgebracht und gegen einen mit einer Geschwindigkeit von 1,5 und 10 m/s rotierenden Deckel gedichtet. Der Anpressdruck des Deckels betrug 35 N/m.

Im Zylinder wurden Luftunter- bzw. Überdrücke von 0.2 bar eingestellt und bei geschlossenem Ventil der Druckverlauf über die Zeit gemessen.

Bei beiden Ausführungen zeigten sich nach einer Zeit von 10 min keine messbaren Druckänderungen und nach 60 min Druckänderungen, die weniger als 0.01 bar betrugen.

Bei den nicht mit Fett ausgerüsteten Dichtungen B und D zeigte sich bei der höchsten Geschwindigkeit eine merkliche Erwärmung nach 60 min. Eine solche Erwärmung konnte bei der mit Fett ausgerüsteten Dichtung nach C nicht festgestellt werden.

## Patentansprüche

1. Dichtung für ein Gehäuse (12), umfassend einen Grundkörper (1), der aus einem extrudierten Profilstrang (2) gefertigt ist, wobei der Grundkörper (1) einen Dichtbereich (4) und einen Fixierbereich (5) aufweist und wobei der Fixierbereich (5) mit als Schnitte ausgebildeten Perforationen (11) versehen ist, **dadurch gekennzeichnet, dass** zwischen dem Dichtbereich (4) und dem Fixierbereich (5) ein Schutzbereich (8) mit geringerer Dicke als der Dichtbereich (4) und der Fixierbereich (5) ausgebildet ist.

2. Dichtung nach Anspruch 1, **dadurch gekennzeichnet, dass** der Dichtbereich (4) profiliert ausgebildet ist und der Fixierbereich (5) als ebener Streifen ausgebildet ist.

3. Dichtung nach Anspruch 1 oder 2, **dadurch gekennzeichnet, dass** der Grundkörper (1) zusammenhängend ausgebildet ist und keine Eckverbindungen aufweist.

4. Dichtung nach einem der Ansprüche 1 bis 3, **dadurch gekennzeichnet, dass** der Fixierbereich (5) teilweise mit Perforationen (11) versehen ist, die als Schnitte und/ oder Perforationen (11) mit runden oder abgerundeten Spitzen ausgebildet sind, wobei der Dichtbereich (4) teilweise gekrümmt ist.

5. Dichtung nach einem der Ansprüche 1 bis 4, **dadurch gekennzeichnet, dass** der Dichtbereich (4) bei Druckbeaufschlagung einer Dichtungsfläche konvex auswölbbar ist.

6. Dichtung nach einem der Ansprüche 1 bis 5, **dadurch gekennzeichnet, dass** im Dichtbereich (4) ein innen liegender, vom Profilstrangmaterial umschlossener Hohlraum (7) ausgebildet ist.

7. Dichtung nach einem der Ansprüche 1 bis 6, **dadurch gekennzeichnet, dass** am Dichtbereich (4) abragende Dichtwülste (9) ausgebildet sind.

8. Dichtung nach einem der Ansprüche 1 bis 7, **dadurch gekennzeichnet, dass** der Fixierbereich (5) Durchgänge (6) für Schrauben, Hülsen, Nieten oder Steckverbindungen aufweist.

9. Dichtung nach einem der Ansprüche 1 bis 8, **dadurch gekennzeichnet, dass** in der Elastomermatrix des Profilstrangmaterials elektrisch leitfähige Komponenten auf Kohlenstoff- oder Metallbasis eingebracht sind.

10. Dichtung nach einem der Ansprüche 1 bis 9, **dadurch gekennzeichnet, dass** beidseitig des Dichtbereichs (4) ein Fixierbereich (5) ausgebildet ist.

11. Dichtung nach einem der Ansprüche 1 bis 10, **gekennzeichnet durch** reibungsreduzierende Mittel.

12. Gehäuse (12), umfassend eine Dichtung nach einem der Ansprüche 1 bis 11, wobei dessen Innenraum ein Medium enthält, welches durch die Dichtung gehindert ist, nach außen zu treten.

13. Gehäuse (12), umfassend eine Dichtung nach einem der Ansprüche 1 bis 11, wobei dessen Innenraum gegenüber von außen anstehenden Medien abgedichtet ist.

14. Verwendung eines Gehäuses (12) nach Anspruch 12 oder 13 in einer dynamischen Anwendung, wobei die Dichtung dynamisch beansprucht wird.

## Claims

1. Seal for a housing (12), comprising a main body (1), which is produced from an extruded profile strand (2), the main body (1) having a sealing region (4) and a fixing region (5) and the fixing region (5) being provided with perforations (11) formed as cuts, **characterized in that** a protective region (8) of a smaller thickness than the sealing region (4) and the fixing region (5) is formed between the sealing region (4) and the fixing region (5).

2. Seal according to Claim 1, **characterized in that** the sealing region (4) is of a profiled form and the fixing region (5) is formed as a planar strip.

3. Seal according to Claim 1 or 2, **characterized in that** the main body (1) is of a contiguous form and has no corner connections.

4. Seal according to one of Claims 1 to 3, **characterized in that** the fixing region (5) is partially provided with perforations (11), which are formed as cuts and/or perforations (11) with round or rounded trips, the sealing region (4) being partially curved.

5. Seal according to one of Claims 1 to 4, **characterized in that** the sealing region (4) can be made to curve convexly when pressure is applied to a sealing surface.

6. Seal according to one of Claims 1 to 5, **characterized in that** an interior cavity (7), enclosed by the profiled strand maternal, is formed in the sealing region (4).

7. Seal according to one of Claims 1 to 6, **characterized in that** protruding sealing beads (9) are formed on the sealing region (4).

8. Seal according to one of Claims 1 to 7, **characterized in that** the fixing region (5) has openings (6) for screws, sleeves, rivets or plug-in connections.

9. Seal according to one of Claims 1 to 8, **characterized in that** carbon- or metal-based electrically conductive components are incorporated in the elastomer matrix of the profiled strand material.

10. Seal according to one of Claims 1 to 9, **characterized in that** a fixing region (5) is formed on both sides of the sealing region (4).

11. Seal according to one of Claims 1 to 10, **characterized by** friction-reducing means.

12. Housing (12), comprising a seal according to one of Claims 1 to 11, the interior space of which contains a medium that is prevented from escaping to the outside by the seal.

13. Housing (12), comprising a seal according to one of Claims 1 to 11, the interior space of which is sealed with respect to external media.

14. Use of a housing (12) according to Claim 12 or 13 in a dynamic application, the seal being dynamically loaded.

## Revendications

1. Garniture d'étanchéité pour un boîtier (12), comprenant un corps de base (1) qui est fabriqué à partir d'une tige profilée extrudée (2), le corps de base (1) possédant une zone d'étanchéité (4) et une zone de fixation (5) et la zone de fixation (5) étant pourvue de perforations (11) réalisées sous la forme d'entailles, **caractérisée en ce qu'**une zone de protection (8) ayant une épaisseur plus faible que celle de la zone d'étanchéité (4) et de la zone de fixation (5) est réalisée entre la zone d'étanchéité (4) et la zone de fixation (5).

2. Garniture d'étanchéité selon la revendication 1, **caractérisée en ce que** la zone d'étanchéité (4) est de configuration profilée et la zone de fixation (5) est réalisée sous la forme d'une bande plane.

3. Garniture d'étanchéité selon la revendication 1 ou 2, **caractérisée en ce que** le corps de base (1) est réalisé cohérent et ne possède aucune liaison de coin.

4. Garniture d'étanchéité selon l'une des revendications 1 à 3, **caractérisée en ce que** la zone de fixation (5) est partiellement pourvue de perforations (11), lesquelles sont réalisées sous la forme d'entailles et/ou de perforations (11) avec des pointes rondes ou arrondies, la zone d'étanchéité (4) étant partiellement curviligne.

5. Garniture d'étanchéité selon l'une des revendications 1 à 4, **caractérisée en ce que** la zone d'étanchéité (4) peut être bombée de manière convexe lorsqu'une surface de garniture d'étanchéité est soumise à la pression.

6. Garniture d'étanchéité selon l'une des revendications 1 à 5, **caractérisée en ce qu'**un espace creux (7) intérieur, entouré de matériau de tige profilée, est formé dans la zone d'étanchéité (4).

7. Garniture d'étanchéité selon l'une des revendications 1 à 6, **caractérisée en ce qu'**un bourrelet d'étanchéité (9) faisant saillie est formé sur la zone d'étanchéité (4).

8. Garniture d'étanchéité selon l'une des revendications 1 à 7, **caractérisée en ce que** la zone de fixation (5) possède des passages (6) pour des vis, des douilles, des rivets ou des assemblages par enfichage.

9. Garniture d'étanchéité selon l'une des revendications 1 à 8, **caractérisée en ce que** des composants électriquement conducteurs à base de carbone ou de métal sont logés dans la matrice d'élastomère du matériau de tige profilée.

10. Garniture d'étanchéité selon l'une des revendications 1 à 9, **caractérisée en ce qu'**une zone de fixation (5) est formée des deux côtés de la zone d'étanchéité (4).

11. Garniture d'étanchéité selon l'une des revendications 1 à 10, **caractérisée par** des moyens de réduction de la friction.

12. Boîtier (12) comprenant une garniture d'étanchéité selon l'une des revendications 1 à 11, son espace intérieur contenant un fluide dont la sortie est empêchée par la garniture d'étanchéité.

13. Boîtier (12) comprenant une garniture d'étanchéité selon l'une des revendications 1 à 11, son espace intérieur étant rendu étanche par rapport aux fluides appliqués à l'extérieur.

14. Utilisation d'un boîtier (12) selon la revendication 12 ou 13 dans une application dynamique, la garniture d'étanchéité étant sollicitée de manière dynamique.
